Europäisches Patentamt

(19) European Patent Office

Office européen des brevets

(11) **EP 0 590 576 B1**

(12) **EUROPEAN PATENT SPECIFICATION**

(45) Date of publication and mention
of the grant of the patent:
**03.01.1996 Bulletin 1996/01**

(51) Int. Cl.$^6$: **B62D 5/04**, G01C 21/20

(21) Application number: **93115585.7**

(22) Date of filing: **27.09.1993**

(54) **System to detect the absolute error of a vehicle steering angle sensor**

System zum Erfassen des absoluten Fehlers eines Fahrzeuglenkwinkelsensors

Système pour détecter l'erreur absolue d'un capteur de l'angle de braquage d'un véhicule

(84) Designated Contracting States:
**DE GB**

(30) Priority: **28.09.1992 JP 258491/92**

(43) Date of publication of application:
**06.04.1994 Bulletin 1994/14**

(73) Proprietor: **HONDA GIKEN KOGYO KABUSHIKI KAISHA**
**Minato-ku Tokyo 107 (JP)**

(72) Inventors:
  • **Shiraishi, Shuji,**
   **c/o K.K Honda**
   **Wako-shi, Saitama-ken (JP)**
  • **Kin, Keiyu,**
   **c/o K.K Honda**
   **Wako-shi, Saitama-ken (JP)**
  • **Ohno, Yasuaki,**
   **c/o K.K Honda**
   **Wako-shi, Saitama-ken (JP)**
  • **Sakaki,Yuji,**
   **c/o K.K Honda**
   **Wako-shi, Saitama-ken (JP)**
  • **Nishihara, Takashi,**
   **c/o K.K Honda**
   **Wako-shi, Saitama-ken (JP)**

(74) Representative: **Fincke, Karl Theodor, Dipl.-Phys. Dr. et al**
**D-81635 München (DE)**

(56) References cited:
**WO-A-90/12698**

  • **PATENT ABSTRACTS OF JAPAN vol. 14, no. 203 (M-0966)25 April 1990 & JP-A-02 041 979 (HONDA MOTOR CO LTD) 13 February 1990**

**Description**

BACKGROUND OF THE INVENTION

FIELD OF THE INVENTION

The present invention relates to a system for detecting an absolute error included in an output from a sensor for a vehicle by use of a response characteristic of the vehicle, so as to correct such absolute error.

DESCRIPTION OF THE PRIOR ART

There are conventionally known systems for correcting an error in output from a sensor for a vehicle, including (1) a system designed such that an error is estimated using a sensor different from a sensor desired to be corrected, e.g., a system for correcting an output ($\delta$ deg.) from a steering angle sensor incapable of detecting an absolute angle, wherein, when the yaw rate of a vehicle body obtained from a wheel speed sensor or a yaw rate sensor has reached 0 (zero) deg/sec, an output $\delta$ is estimated to be equal to 0 (zero) (for example, see Japanese Patent Application Laid-open No.41979/90); (2) a manually correcting system, e.g., a system in which a gyro-sensor is corrected by inputting a now location in a navigation system; and (3) a system in which an error of mounting of a sensor or an error of the sensor itself have been previously taken into consideration and corrected uniformly.

When the correction is conducted using another sensor as in the above prior art, however, an error is certainly included even in an output from the other sensor, thereby bringing about a reduction in accuracy for a sensor for a precise control of movement of a vehicle. In addition, it is necessary to confirm the stability of the other sensor and, hence, a stability conforming means is required separately, and moreover, the correction is possible, only when the movement of the vehicle has entered a certain stable region, resulting in a lot of time required for the correction. When the manual correction is conducted, a human error, such as, a mis-correction, and a losing of a correction operation is unavoidable. Further, when the error is set uniformly, it is necessary to improve a processing accuracy, or to improve the degree of skill of an assembling worker, in order to minimize the sensor-assembling error, leading to an increase in cost. In addition, there is a possibility that the assembling accuracy is different for every vehicle, or type of vehicle, to which the sensor is to be assembled, resulting in a variability of performance.

SUMMARY OF THE INVENTION

Accordingly, it is an object of the present invention to provide a system for detecting an absolute error of a sensor for a vehicle, wherein errors in outputs from two sensors which are in a linear response relationship can be detected simultaneously, thereby overcoming the above problems.

To achieve the above object, according to the present invention, there is provided a system for detecting an absolute error of a sensor for a vehicle, comprising: a first sensor for detecting a first physical quantity; a second sensor for detecting a second physical quantity having a linear response relationship with the first physical quantity; at least one third sensor for detecting a movement condition of the vehicle, which varies parameters of a linear response function established between the first and second physical quantities; parameter determination means for setting the parameters in correspondence to a value detected by the third sensor; calculating means for calculating, from the linear response function, an overall deviation generated due to errors in outputs from the first and second sensors, on the basis of an output from the first sensor, an output from the parameter determination means, and an output from the second sensor corresponding to these outputs; accumulating means for accumulating the overall deviation as well as the output from the parameter determination means at the time when the overall deviation has been calculated; and error calculating means for calculating errors in outputs from the first and second sensors on the basis of the overall deviation and parameters accumulated in the accumulating means.

With the above construction, it is possible to simultaneously detect the errors in outputs from the first and second sensors by use of the linear response relationship between the physical quantities detected by the sensors, and to detect absolute errors in outputs from the sensors promptly and with an excellent accuracy.

The above and other objects, features and advantages of the invention will become apparent from the following description of preferred embodiments taken in conjunction with the accompanying drawings.

BRIEF DESCRIPTION OF THE DRAWINGS

Fig.1 is a block diagram illustrating a relationship between input and output into and from a system;
Fig.2 is a block diagram illustrating a construction according to a preferred embodiment of the present invention;
Fig.3 is a graph for explaining an interpolation of parameters; and
Fig.4 is a flow chart illustrating a processing procedure.

## DESCRIPTION OF THE PREFERRED EMBODIMENTS

The present invention will now be described by way of a preferred embodiment in connection with the accompanying drawings.

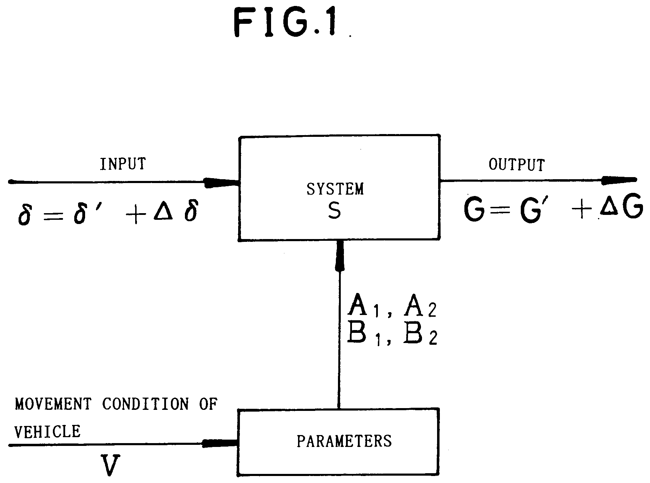

Referring first to Fig.1, a steering angle $\delta$, as a first physical quantity, is inputted into a vehicle movement system. A lateral acceleration G as a lateral momentum of a second physical quantity, which permits a linear response function S to be established between the steering angle $\delta$, is outputted from the vehicle movement system . Parameters $A_1$, $A_2$, $B_1$ and $B_2$ of the linear response function S are varied by a vehicle speed V as a movement condition of a vehicle. If a real value and a detection value of steering angle are represented by $\delta$ and $\delta'$, respectively, a deviation between the real value $\delta$ and the detection value $\delta'$ is by $\Delta\delta$; a real value and a detection value of lateral acceleration are by G and G', respectively; and a deviation between the real and detection values G and G' is by $\Delta G$, these deviations $\Delta\delta$ and $\Delta G$ are detected using a response characteristic of a vehicle by a system according to the present invention.

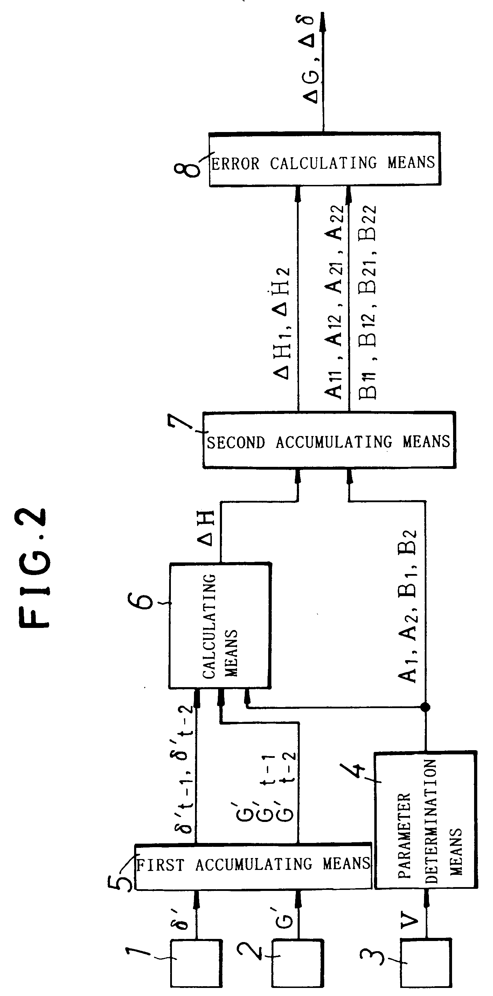

Referring to Fig.2, the system according to this embodiment comprises a first sensor 1 for detecting the steering angle to deliver a detection value of steering angle $\delta'$, a second sensor 2 for detecting the lateral acceleration to deliver a detection value of lateral acceleration G', and a third sensor 3 for detecting the vehicle speed V. The parameters $A_1$, $A_2$, $B_1$ and $B_2$ are determined in a parameter determination means 4 in accordance with the vehicle speed V detected in the third sensor 3. Outputs from the first and second sensors 1 and 2 are accumulated in a first accumulating means 5. An overall deviation $\Delta H$, generated on the basis of errors in outputs from the first and second sensors 1 and 2, is determined in a calculating means 6 by applying, to the linear response function S, output hysteresis $\delta'_{t-1}$, $\delta'_{t-2}$ from the first sensor 1 which have been obtained from the first accumulating means 5 and outputs $A_1$, $A_2$, $B_1$ and $B_2$ from the parameter determination means 4 as well as output hysteresis G', $G'_{t-1}$ and $G'_{t-2}$ from the second sensor 2 which have been obtained from the first accumulating means 5 in correspondence to $\delta'_{t-1}$, $\delta'_{t-2}$, $A_1$, $A_2$, $B_1$ and $B_2$. The overall deviation $\Delta H$ and the outputs $A_1$, $A_2$, $B_1$ and $B_2$ from the parameter determination means 4 at the time when such overall deviation $\Delta H$ has been calculated, are accumulated in a second accumulating means 7. The errors in outputs from the first and second sensors 1 and 2 are calculated in an error calculating means 8 on the basis of the overall deviation $\Delta H$ and parameters $A_1$, $A_2$, $B_1$ and $B_2$ accumulated in the second accumulating means 7.

In a relationship between input and output into and from the system as shown in Fig.1, the linear response function S can be assumed according to a following first equation (1) using a Z-conversion:

$$S = G/\delta \qquad (1)$$

$$= (b_1 Z^{-1} + b_2 Z^{-2})/(1 + a_1 Z^{-1} + a_2 Z^{-2})$$

From this first equation (1), a following equation is given:

$$(1 + a_1 Z^{-1} + a_2 Z^{-2}) G_{(t)} = (b_1 Z^{-1} + b_2 Z^{-2}) \delta_{(t)}$$

If $G_{(t)} = G_t$ ($\Delta t = 1$) , a following equation is given:

$$G_t = -a_1 G_{t-1} - a_2 G_{t-2} + b_1 \delta_{t-1} + b_2 \delta_{t-2}$$

If $-a_1 = A_1$, $-a_2 = A_2$, $b_1 = B_1$ and $b_2 = B_2$, a following equation (2) is given:

$$G_t = A_1 G_{t-1} + A_2 G_{t-2} + B_1 \delta_{t-1} + B_2 \delta_{t-2} \qquad (2)$$

Here, $G_t = G_t' + \Delta G$, and $\delta_t = \delta_t' + \Delta\delta$, and therefore, the above equation (2) is transformed into a following third equation (3):

$$G_t' - A_1 G'_{t-1} + A_2 G'_{t-2} - B_1 \delta'_{t-1} - B_2 \delta'_{t-2} = (A_1 + A_2 - 1)\Delta G + (B_1 + B_2) \Delta\delta \qquad (3)$$

In the above third equation (3), the left side can directly be calculated by only the values detected by the first and second sensors, and the right side is indicative of an overall deviation based on the deviations $\Delta G$ and $\Delta\delta$. Here, if the directly calculatable left side is replaced by the overall deviation $\Delta H$, a following equation (4) is given:

$$\Delta H = (A_1 + A_2 - 1)\Delta G + (B_1 + B_2) \Delta\delta \qquad (4)$$

Thus, a relationship represented by the equation (4) is always established in a scope of linear movement in the system shown in Fig.1. The parameters $A_1$, $A_2$, $B_1$ and $B_2$ can previously be set in the first and second sensors 1 and 2 by an experiment, or the like in accordance to the movement condition of the vehicle. Unknown quantities in the equation (4)

are only $\Delta G$ and $\Delta \delta$ and hence, the $\Delta G$ and $\Delta \delta$ can be determined by solving simultaneous equations provided by determining $A_1$, $A_2$, $B_1$, $B_2$ and $\Delta H$ in the equations (4) in different movement conditions of the vehicle, i.e., at different vehicle speeds $V_1$ and $V_2$.

More specifically, if the overall deviation $\Delta H$ and parameters $A_1$, $A_2$, $B_1$ and $B_2$ at a vehicle speed equal to $V_1$, are represented by $\Delta H_1$, $A_{11}$, $A_{21}$, $B_{11}$ and $B_{21}$, respectively, and the overall deviation $\Delta H$ and parameters $A_1$, $A_2$, $B_1$ and $B_2$ at a vehicle speed equal to $V_2$ are represented by $\Delta H_2$, $A_{12}$, $A_{22}$, $B_{12}$ and $B_{22}$, respectively, following simultaneous equations (5) and (6) are established:

$$\Delta H_1 = (A_{11} + A_{21} - 1) \Delta G + (B_{11} + B_{21}) \Delta \delta \tag{5}$$

$$\Delta H_2 = (A_{12} + A_{22} - 1) \Delta G + (B_{12} + B_{22}) \Delta \delta \tag{6}$$

Here, assuming that $\alpha_1 = A_{11} + A_{21} - 1$, $\alpha_2 = A_{12} + A_{22} - 1$, $\beta_1 = B_{11} + B_{21}$, and $\beta_2 = B_{12} + B_{22}$, and if $\alpha_1$, $\alpha_2$, $\beta_1$ and $\beta_2$ are put into the equations (5) and (6), following equations (7) and (8) are given:

$$\Delta H_1 = \alpha_1 \Delta G + \beta_1 \Delta \delta \tag{7}$$

$$\Delta H_2 = \alpha_2 \Delta G + \beta_2 \Delta \delta \tag{8}$$

If these equations (7) and (8) are solved, following equations (9) and (10) are obtained:

$$\Delta G = (\Delta H_1 \beta_2 - \Delta H_2 \beta_1)/(\alpha_1 \beta_2 - \alpha_2 \beta_1) \tag{9}$$

$$\Delta \delta = (\Delta H_2 \alpha_1 - \Delta H_1 \alpha_2)/(\alpha_1 \beta_2 - \alpha_2 \beta_1) \tag{10}$$

The system according to the present embodiment as shown in Fig.2 is based on the above-described principle. The parameter determination means 4 determines the parameters $A_1$, $A_2$, $B_1$ and $B_2$ dependent on the vehicle speed V determined in the third sensor 3, but in determining the parameters $A_1$, $A_2$, $B_1$ and $B_2$, they are set for every different preset movement conditions of the vehicle, i.e., every preset vehicle speeds. When the vehicle speed V, detected by the third sensor 3, is between the adjacent preset vehicle speeds, the parameters $A_1$, $A_2$, $B_1$ and $B_2$ are determined by a linear interpolation.

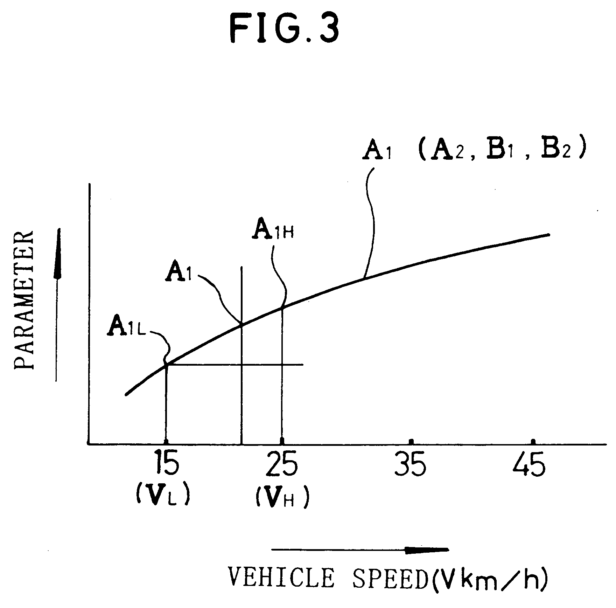

For example, for determination of the parameter $A_1$, values of the $A_1$ have been previously determined, for example, at every vehicle speeds 15, 25, 35, 45 km/hr, --- set at intervals of 10 km/hr, as shown in Fig.3. When a vehicle speed V is between two adjacent vehicle speeds and if the lower preset vehicle speed is represented by $V_L$; the preset parameter corresponding to the lower preset vehicle speed is by $A_{1L}$; the higher preset vehicle speed is by $V_H$; and the preset parameter corresponding to the higher preset vehicle speed is by $A_{1H}$, an interpolation value $A_1'$ of the parameter $A_1$ is calculated according to following equations (11) and (12):

$$V' = (V - V_L)/10 \tag{11}$$

$$A_1' = A_{1L} + V' \times (A_{1H} - A_{1L}) \tag{12}$$

Even for the other parameters $A_2$, $B_1$ and $B_2$, an interpolation similar to that described above is carried out, thereby giving interpolation values $A_2'$, $B_1'$ and $B_2'$. This is represented by following equations:

$$A_2' = A_{2L} + V' \times (A_{2H} - A_{2L}) \tag{13}$$

$$B_1' = B_{1L} + V' \times (B_{1H} - B_{1L}) \tag{14}$$

$$B_2' = B_{2L} + V' \times (B_{2H} - B_{2L}) \tag{15}$$

The preset parameters $B_1$ and $B_2$ on the output side of the second sensor 2 have been obtained by an experiment using the second sensor 2 alone at every preset vehicle speeds. In carrying out the interpolation in association with the first sensor 1, it is necessary to conduct an interpolating calculation in consideration of the fact that a control gain $G_{AIN}$ does not depart from a range in which a control system is stable. Thereupon, the control gain $G_{AIN}$ is defined to be represented by

$$G_{AIN} = (B_1 + B_2) / (1 - A_1 - A_2) \tag{16}$$

and if a control gain corresponding to a lower value in a region of vehicle speeds V is represented by $G_{AINL}$, and a control gain corresponding to a higher value is by $G_{AINH}$, then an interpolation value $G_{AIN}'$ is given according to a following equation (17):

$$G_{AIN}' = G_{AINL} + V' \times (G_{AINH} - G_{AINL}) \qquad (17)$$

Here, an interpolation factor K is calculated according to a following equation (18) from values $A_1'$, $A_2'$ and $G_{AIN}'$ determined from the equations (12), (13) and (17):

$$K = G_{AIN}' \times \{(1 - A_1' - A_2') / (B_1' + B_2')\} \qquad (18)$$

From this equation (18) and the above-described equations (14) and (15), following equations (19) and (20) are derived:

$$B_1'' = K \times B_1' \qquad (19)$$

$$B_2'' = K \times B_2' \qquad (20)$$

Thus, values $A_1'$ and $A_2'$, determined in the equations (12) and (13) as well as values $B_1''$ and $B_2''$, determined in the equations (19) and (20) are parameters obtained after interpolation, and equations, $\alpha = A_1' + A_2' - 1$, and $\beta = B_1'' + B_2''$, are established.

The first accumulating means 5 accumulates the output $\delta'$ from the first sensor 1 and the output G' from the second sensor 2. The hysteresis $\delta'_{t-1}$ and $\delta'_{t-2}$ of outputs from the first sensor 1 and the hysteresis G', $G'_{t-1}$ and $G'_{t-2}$ of outputs from the second sensor 2 are applied from the first accumulating means 5 to the calculating means 6.

On the basis of the output hysteresis $\delta'_{t-1}$, $\delta'_{t-2}$, G', $G'_{t-1}$ and $G'_{t-2}$, obtained from the first accumulating means 5, as well as the parameters $A_1$, $A_2$, $B_1$ and $B_2$ obtained in the parameter determination means 4, the calculating means 6 calculates, from the linear response function S, an overall deviation $\Delta H$ generated due to errors in outputs from the first and second sensors 1 and 2, i.e., a value $(= G_t' - A_1 G'_{t-1} - A_2 G'_{t-2} - B_1 \delta'_{t-1} - B_2 \delta'_{t-2})$ represented by the left side of the above-described equation (3).

Further, the error calculating means 8 calculates an error $\Delta\delta$ in output from the first sensor 1 and an error $\Delta G$ in output from the second sensor 2 by solving the simultaneous equations (7) and (8) dependent on two different movement conditions, as represented by the equations (9) and (10), on the basis of $\Delta H_1$, $\Delta H_2$, $\alpha_1$, $\alpha_2$, $\beta_1$ and $\beta_2$ read from the accumulating means 7 in accordance with these movement conditions.

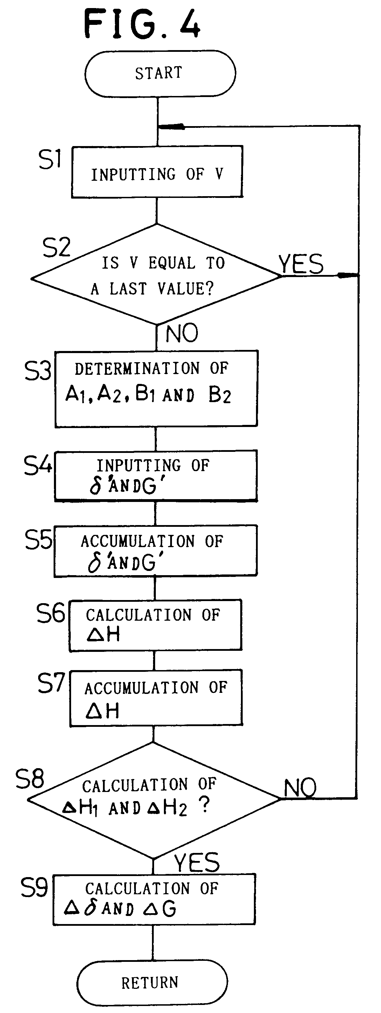

A processing procedure in the system of the present invention, constructed in the above manner, will be described below with reference to Fig.4. First, a vehicle speed V is inputted at a first step S1, and then, it is judged at a second step S2 whether or not the inputted vehicle speed V is equal to the last speed. If it is equal to the last speed, the processing is returned to the first step S1, and if the inputted vehicle speed V is not equal to the last speed, the processing is advanced to a third step S3.

At the third step S3, parameters $A_1$, $A_2$, $B_1$ and $B_2$, corresponding to the inputted vehicle speed V, are determined. Outputs $\delta'$ and G', from the first and second sensors 1 and 2, are inputted at a fourth step S4 and then accumulated at a fifth step S5. An overall deviation $\Delta H$ ($= G_t' - A_1 G'_{t-1} - A_2 G'_{t-2} - B_1 \delta'_{t-1} - B_2 \delta'_{t-2}$) is calculated at a sixth step S6 on the basis of the accumulated outputs $\delta'$ and G', and then accumulated at a seventh step S7.

At an eighth step S8, it is judged whether or not overall deviations $\Delta H_1$ and $\Delta H_2$, corresponding to different vehicle speeds $V_1$ and $V_2$, have been calculated. If they are not calculated, the processing is returned to the first step S1, and if they have been calculated, the error $\Delta\delta$ in output from the first sensor 1 and the error $\Delta G$ in output from the second sensor 2 are determined at a ninth step S9 by solving the simultaneous equations.

In this manner, the errors $\Delta\delta$ and $\Delta G$, in outputs from the first and second sensors 1 and 2 which are in a linear response relationship, can be detected, simultaneously, by utilizing a linear response characteristic. Therefore, as compared with a prior art system in which a correction using another sensor or a manual correction is carried out, it is possible to insure a control accuracy insufficient for a sensor for a precise control of vehicle movement, and to provide a prompt detection at a low cost, because of processing by software.

The technique for definitely determining the errors $\Delta\delta$ and $\Delta G$ in outputs have been described in the above embodiment, but it is difficult to perform a correction for an influence of the errors possessed by the system itself in addition to the first and second sensors 1 and 2. Thereupon, if a statistical technique is used for setting an error in a linear response function and determining values $\Delta\delta$ and $\Delta G$, so that such error is minimal, it is possible to further improve the detection accuracy. Such technique will be described below.

An error $\varepsilon k$ ( $k = 1 \sim n$) is introduced into the linear response function, as given in an equation (21), thereby determining values $\Delta \delta$ and $\Delta G$, so that such error is smallest in the sense of a square at a minimum.

$$\begin{cases} \Delta H_1 = \alpha_1 \Delta G + \beta_1 \Delta \delta + \varepsilon_1 \\ \Delta H_2 = \alpha_2 \Delta G + \beta_2 \Delta \delta + \varepsilon_2 \\ \qquad \vdots \\ \Delta Hn = \alpha n \Delta G + \beta n \Delta \delta + \varepsilon n \end{cases} \qquad --- \quad (21)$$

If this equation (21) is replaced by following equations:

$$H_{(n)} = \begin{pmatrix} \Delta H_1 \\ \vdots \\ \Delta Hn \end{pmatrix} \qquad\qquad C_{(n)} = \begin{pmatrix} \alpha_1 & \beta_1 \\ & \\ \alpha n & \beta n \end{pmatrix}$$

$$X = \begin{pmatrix} \Delta G \\ \\ \Delta \delta \end{pmatrix} \qquad\qquad \varepsilon_{(n)} = \begin{pmatrix} \varepsilon_1 \\ \vdots \\ \varepsilon n \end{pmatrix}$$

, then the equation $H_{(n)} = C_{(n)} \times X + \varepsilon_{(n)}$ (22) is established.
An evaluation function represented by Jn is defined as

$$Jn = \frac{1}{2} \sum_{k=1}^{n} \varepsilon k^2 = \frac{1}{2} \varepsilon^*_{(n)} \times \varepsilon_{(n)} \tag{23}$$

Here, if $\varepsilon^*_{(n)} = (\varepsilon_1 \sim \varepsilon n)$, a condition where a value Jn is minimal is as follows:

$$\frac{\partial Jn}{\partial X} = 0 \tag{24}$$

From the equations (22), (23) and (24), a following expression (25) is established:

$$X = \begin{pmatrix} \Delta G \\ \Delta \delta \end{pmatrix} = (C^*_{(n)} \times C_{(n)})^{-1} \times C^* \times H_{(n)}$$

$$\frac{\begin{pmatrix}\alpha_1 \sim \alpha_n \\ \beta_1 \sim \beta_n\end{pmatrix} \times \begin{pmatrix}\Delta H_1 \\ \vdots \\ \Delta H_n\end{pmatrix}}{\begin{pmatrix}\alpha_1 \sim \alpha_n \\ \beta_1 \sim \beta_n\end{pmatrix} \times \begin{pmatrix}\alpha_1 \beta_1 \\ \vdots \\ \alpha_n \beta_n\end{pmatrix}} = \frac{\begin{pmatrix}\sum_1^n \alpha k \cdot \Delta Hk \\ \sum_1^n \beta k \cdot \Delta Hk\end{pmatrix}}{\begin{pmatrix}\sum_1^n \alpha k^2 & \sum_1^n \alpha k \beta k \\ \sum_1^n \alpha k \beta k & \sum_1^n \beta k^2\end{pmatrix}}$$

$$\therefore \begin{pmatrix}\Delta G \\ \Delta \delta\end{pmatrix} = \begin{pmatrix}\sum_1^n \alpha k^2 & \sum_1^n \alpha k \beta k \\ \sum_1^n \alpha k \beta k & \sum_1^n \beta k^2\end{pmatrix}^{-1} \times \begin{pmatrix}\sum_1^n \alpha k \cdot \Delta Hk \\ \sum_1^n \beta k \cdot \Delta Hk\end{pmatrix} \quad ---(25)$$

This is a form similar to the result of the above-described definite technique.
Here, if

$$\begin{cases}\alpha_1^* = \sum_1^n \alpha k^2 \\ \alpha_2^* = \beta_1^* = \sum_1^n \alpha k \beta k \\ \beta_2^* = \sum_1^n \beta k^2\end{cases} \qquad \begin{cases}\Delta H_1^* = \sum_1^n \alpha k \cdot \Delta Hk \\ \Delta Hn^* = \sum_1^n \beta k \cdot \Delta Hk\end{cases} \quad ---(26)$$

, then

$$\Delta G = \frac{\Delta H_1^* \times \beta_2^* - \Delta H_2^* \times \beta_1^*}{\alpha_1^* \times \beta_2^* - \alpha_2^* \times \beta_1^*} \tag{27}$$

$$\Delta \delta = \frac{\Delta H_2^* \times \alpha_1^* - \Delta H_1^* \times \alpha_2^*}{\alpha_1^* \times \beta_2^* - \alpha_2^* \times \beta_1^*} \tag{28}$$

are established, so that $\Delta \delta$ and $\Delta G$ can be determined, wherein $\alpha^*, \beta^*$ and $\Delta H^*$ may be increased successively. Thus, it is possible to provide a yet highly improved accuracy by such a definite technique.

Although the embodiment of the present invention has been described in detail, it will be understood that the present invention is not limited to such embodiment, and various modification and variations in design can be made without departing from the spirit and scope of the invention defined in claims.

7

For example, it is possible to carry out the present invention in connection with a first sensor for detecting a steering angle as a first physical quantity and a second sensor for detecting a yaw rate as a second physical quantity.

**Claims**

1. A system for detecting an absolute error of a sensor for a vehicle, comprising:
   a first sensor (1) for detecting a first physical quantity;
   a second sensor (2) for detecting a second physical quantity having a linear response relationship with the first physical quantity;
   at least one third sensor (3) for detecting a movement condition of the vehicle which varies parameters of a linear response function established between the first and second physical quantities, characterized by
   parameter determination means (4) for setting the parameters in correspondence to a value detected by said third sensor (3);
   calculating means (6) for calculating, from said linear response function, an overall deviation generated due to errors in outputs from the first and second sensors, on the basis of an output from the first sensor, an output from the parameter determination means, and an output from the second sensor corresponding to said outputs;
   accumulating means (7) for accumulating said overall deviation as well as said output from said parameter determination means at the time when said overall deviation has been calculated; and
   error calculating means (8) for calculating errors in outputs from the first and second sensors (1, 2) on the basis of said overall deviation and parameters accumulated in said accumulating means (7).

2. A system for detecting an absolute error of a sensor for a vehicle according to claim 1, wherein said parameter determination means (4) sets the parameter for every different movement condition of the vehicle, and obtains a parameter corresponding to a detection value detected by the third sensor (3) from a control gain having a linear interpolation of said parameters and a linear response function when the movement condition of the vehicle detected by the third sensor (3) is between the adjacent set preset movement conditions of the vehicle.

3. A system for detecting an absolute error of a sensor for a vehicle according to claim 1 or 2, wherein said first sensor (1) is a sensor for detecting a steering angle as the first physical quantity, said second sensor (2) is a sensor for detecting a lateral momentum as the second physical quantity, and said third sensor (3) is a sensor for detecting a vehicle speed as the movement condition of the vehicle.

**Patentansprüche**

1. System zur Detektion eines absoluten Fehlers eines Sensors für ein Fahrzeug, umfassend:
   einen ersten Sensor (1) zur Detektion einer ersten physikalischen Größe,
   einen zweiten Sensor (2) zur Detektion einer zweiten physikalischen Größe, die eine lineare Antwortbeziehung zu der ersten physikalischen Größe hat,
   wenigstens einen dritten Sensor (3) zur Detektion eines Bewegungszustandes des Fahrzeugs, der Parameter einer linearen Antwortfunktion variiert, die zwischen der ersten und der zweiten physikalischen Größe begründet ist, gekennzeichnet durch,
   eine Parameterbestimmungseinrichtung (4) zur Einstellung der Parameter nach Maßgabe eines mit dem dritten Sensor (3) detektierten Wertes,
   eine Berechnungseinrichtung (6), die dazu eingerichtet ist, aus der linearen Antwortfunktion eine durch Fehler in Ausgangswerten des ersten Sensors und des zweiten Sensors hervorgerufenen Gesamtabweichung auf der Basis eines Ausgangswertes von dem ersten Sensor,
   eines Ausgangswertes von der Parameterbestimmungseinrichtung und eines Ausgangswertes von dem zweiten Sensor gemäß diesen Ausgangswerten zu berechnen,
   eine Speichereinrichtung (7) zur Speicherung der Gesamtabweichung sowie des Ausgangswertes von der Parameterbestimmungseinrichtung zu der Zeit, wenn die Gesamtabweichung berechnet worden ist, und
   eine Fehlerberechnungseinrichtung (8) zur Berechnung von Fehlern in Ausgangswerten von dem ersten Sensor (1) und dem zweiten Sensor (2) auf der Basis der Gesamtabweichung und der in der Speichereinrichtung (7) akkumulierten Parameter.

2. System zur Detektion eines absoluten Fehlers eines Sensors für ein Fahrzeug nach Anspruch 1, wobei die Parameterbestimmungseinrichtung (4) den Parameter für jeden unterschiedlichen Bewegungszustand des Fahrzeugs einstellt und einen mit einem von dem dritten Sensor (3) detektierten Detektionswert korrespondierenden Parameter aus einem Kontrollübergangsfaktor mit einer linearen Interpolation der Parameter und einer linearen Antwortfunktion erhält, wenn der mit dem dritten Sensor (3) detektierte Bewegungszustand des Fahrzeugs zwischen den benachbart voreingestellten Bewegungszuständen des Fahrzeugs liegt.

3. System zur Detektion eines absoluten Fehlers eines Sensors für ein Fahrzeug nach Anspruch 1 oder 2, wobei der erste Sensor (1) ein Sensor zu Detektion eines Lenkwinkels als die erste physikalische Größe ist, wobei der zweite Sensor (2) ein Sensor zur Detektion eines Quermomentes als die zweite physikalische Größe ist, und wobei der dritte Sensor (3) ein Sensor zur Detektion einer Fahrzeuggeschwindigkeit als Bewegungszustand des Fahrzeugs ist.

**Revendications**

1. Système pour détecter une erreur absolue d'un capteur pour véhicule, comprenant :

un premier capteur (1) pour détecter une première quantité physique ;

un second capteur (2) pour détecter une seconde quantité physique ayant une relation de réponse linéaire avec la première quantité physique ;

au moins un troisième capteur (3) pour détecter une condition de mouvement du véhicule qui modifie les paramètres de la fonction de réponse linéaire établie entre les premières et seconde quantités physiques, caractérisé par

des moyens de détermination de paramètres (4) pour fixer les paramètres en correspondance avec une valeur détectée par ledit troisième capteur (3) ;

des moyens de calcul (6) pour calculer, à partir de ladite fonction de réponse linéaire, une déviation globale générée et due aux erreurs dans les sorties provenant des premier et second capteurs, sur la base d'une sortie provenant du premier capteur, d'une sortie provenant des moyens de détermination de paramètres, et d'une sortie provenant du second capteur correspondant auxdites sorties ;

des moyens d'accumulation (7) pour cumuler ladite déviation globale ainsi que ladite sortie provenant desdits moyens de détermination de paramètres au moment où ladite déviation globale est calculée ; et

des moyens de calcul d'erreur (8) pour calculer les erreurs dans les sorties provenant des premier et second capteurs (1, 2) sur la base de ladite déviation globale et des paramètres accumulés dans lesdits moyens d'accumulation (7).

2. Système pour détecter une erreur absolue d'un capteur pour véhicule selon la revendication 1, dans lequel lesdits moyens de détermination de paramètre (4) fixent le paramètre pour chaque condition différente de mouvement du véhicule, et obtiennent un paramètre correspondant à une valeur de détection détectée par le troisième capteur (3) à partir d'un gain de commande ayant une interpolation linéaire desdits paramètres et une fonction de réponse linéaire lorsque la condition de mouvement du véhicule détectée par le troisième capteur (3) se situe entre les conditions de mouvement adjacentes prédéterminées et fixées du véhicule.

3. Système pour détecter une erreur absolue d'un capteur pour véhicule selon la revendication 1 ou 2, dans lequel ledit premier capteur (1) est un capteur pour détecter un angle de braquage comme première quantité physique, ledit second capteur (2) est un capteur pour détecter une quantité de mouvement latérale comme seconde quantité physique, et ledit troisième capteur (3) est un capteur pour détecter une vitesse de véhicule comme condition de mouvement du véhicule.

# FIG.1

INPUT

$$\delta = \delta' + \Delta \delta$$

SYSTEM
S

OUTPUT

$$G = G' + \Delta G$$

$$A_1, A_2$$
$$B_1, B_2$$

MOVEMENT CONDITION OF
VEHICLE

$$V$$

PARAMETERS

# FIG.2

# FIG.3

# FIG. 4

```
        START
          │
  S1 │ INPUTTING OF V │
          │
  S2 ╱ IS V EQUAL TO ╲ ── YES ──┐
     ╲ A LAST VALUE? ╱          │
          │ NO                  │
  S3 │ DETERMINATION OF         │
     │ A₁, A₂, B₁ AND B₂ │      │
          │                     │
  S4 │ INPUTTING OF             │
     │ δ' AND G' │              │
          │                     │
  S5 │ ACCUMULATION OF          │
     │ δ' AND G' │              │
          │                     │
  S6 │ CALCULATION OF           │
     │ ΔH │                     │
          │                     │
  S7 │ ACCUMULATION OF          │
     │ ΔH │                     │
          │                     │
  S8 ╱ CALCULATION OF ╲ ── NO ──┘
     ╲ ΔH₁ AND ΔH₂ ? ╱
          │ YES
  S9 │ CALCULATION OF │
     │ Δδ AND ΔG │
          │
        RETURN
```